# EUROPEAN PATENT SPECIFICATION

(11) **EP 0 430 268 B1**
(45) Date of publication and mention of the grant of the patent: **21.08.1996**
(21) Application number: 90122900.5
(22) Date of filing: 29.11.1990
(51) Int. Cl.: G11B 5/008, G11B 5/86, G11B 5/48

(54) **Magnetic recording and playback apparatus**
Magnetisches Aufnahme- und Wiedergabegerät
Appareil d'enregistrement et de reproduction magnétique

(30) Priority: 29.11.1989 JP 310450/89
(43) Date of publication of application: 05.06.1991
(73) Proprietor: SONY CORPORATION, Tokyo 141 (JP)
(72) Inventor: Fukuyama, Munekatsu, c/o Sony Corporation, Tokyo (JP); Soda, Yutaka, c/o Sony Corporation, Tokyo (JP); Fujiwara, Keisuke, c/o Sony Corporation, Tokyo (JP); Yada, Hiroaki, c/o Sony Corporation, Tokyo (JP); Seko, Satoru, c/o Sony Corporation, Tokyo (JP); Sekiya, Tetsuo, c/o Sony Corporation, Tokyo (JP)
(74) Representative: TER MEER - MÜLLER - STEINMEISTER & PARTNER

(56) References cited:
- EP-A- 0 381 266
- US-A- 2 922 144
- PATENT ABSTRACTS OF JAPAN vol. 6, no. 38 (P-105)(916) 9 March 1982 & JP-A-56 156 975
- PATENT ABSTRACTS OF JAPAN vol. 12, no. 43 (P-664)(2890) 9 February 1988 & JP-A-62 189 629
- PATENT ABSTRACTS OF JAPAN vol. 3, no. 106 (E-135)7 September 1979 & JP-A-54 083 811
- PATENT ABSTRACTS OF JAPAN vol. 8, no. 51 (P-259)(1488) 8 March 1984 & JP-A-58 200 412

## Description

### BACKGROUND OF THE INVENTION

This invention relates to a magnetic recording apparatus.

The stationary-head type DAT (digital audio tape recorder) (hereinafter, referred to as S-DAT) compatible with the conventional compact cassette is now being developed.

### [Problems that this invention is to slove]

If the digital magnetic recording and reproducing apparatus is widely used in the feature as the S-DAT is developed, the old software (, or information recorded in analog signals) will be desired to be converted into digital signals and recorded.

In the prior art as disclosed by JP-A-62 189 629, when the contents of the analog recording magnetic tape are recorded on a digital recording magnetic tape, two tape recorders for analog-signal recorded magnetic tape and digital recorded magnetic tape are used or a tape recorder having a tape deck for digital and analog purposes is used, thus inevitably increasing the size of the system, the power consumption and the cost. JP-A-56 156 975 discloses a magnetic recorder for reproducing an analog signal recorded on a magnetic tape and for rewriting said analog signal to the same magnetic tape.

### OBJECT AND SUMMARY OF THE INVENTION

This invention, in view of the above aspects, is to provide a magnetic recording apparatus capable of rewriting on the analog-signal recorded magnetic tape the corresponding digital signal into which the analog signal on the magnetic tape is converted, and capable of reducing the size of the system and the power consumption.

This invention proposes a magnetic recording (and reproducing) apparatus such as a stationary-head type DAT (digital audio tape recorder), comprising the features of appended claim. Therefore, the analog-signal recorded on a magnetic tape can be replaced by the corresponding digital signal on the same magnetic tape. When the digital deck is widely used in the feature, the old software (information recorded in analog signals) can be used. In addition, the apparatus having the function for converting the analog signal into the digital signal can be small-sized and constructed to consume small power.

In this case, if the digital signal is not recorded on another new magnetic tape, but can be recorded on this analog-signal recorded magnetic tape in place of the analog signal, the new magnetic tape is not necessary and thus the tape can be saved.

### BRIEF DESCRIPTION OF THE DRAWINGS

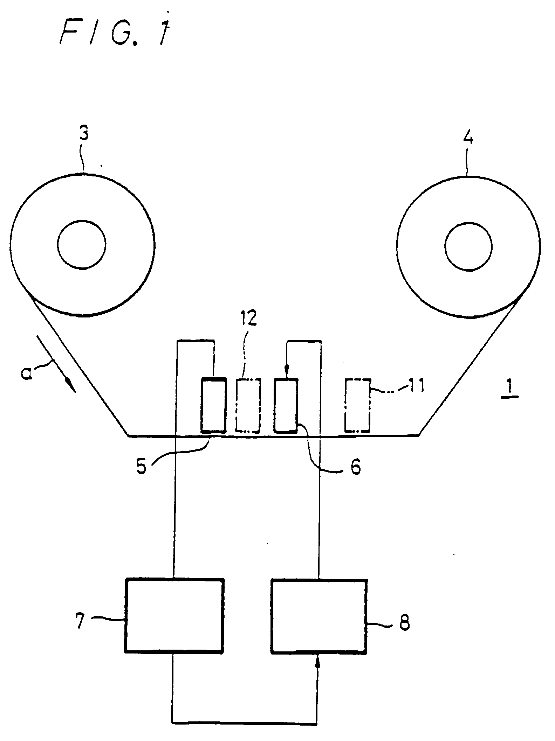

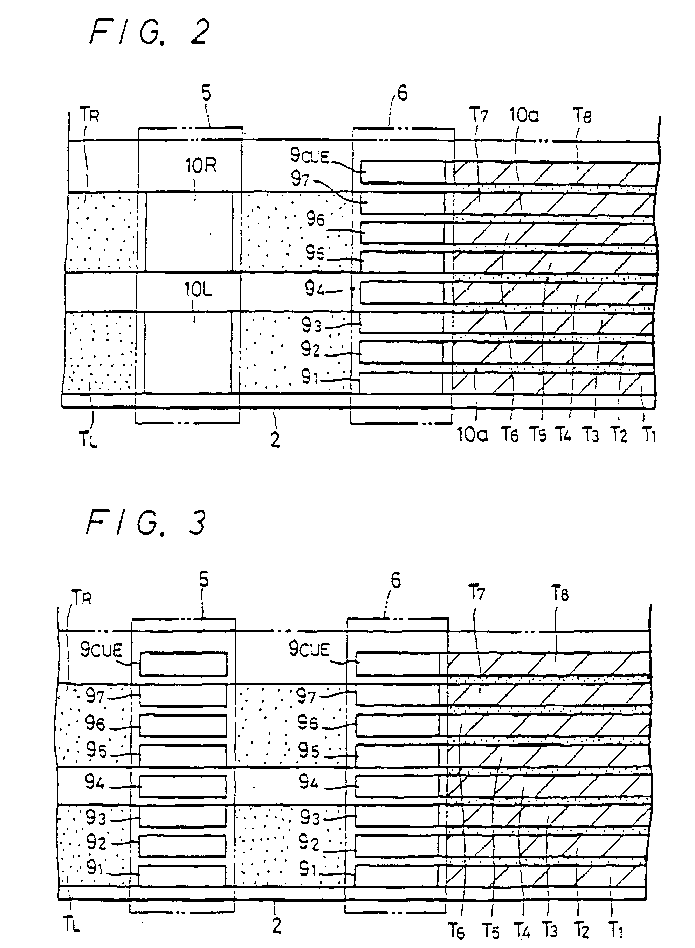

Fig. 1 shows the construction of an embodiment of a magnetic recording and reproducing apparatus of the invention, and Figs. 2 and 3 are plan views of the magnetic tape on which the analog signal is replaced by the digital signal by rewriting.

### DETAILED DESCRIPTION OF THE PREFERRED EMBODIMENTS

According to this invention, there is provided a magnetic recording apparatus comprising a reproduce head 5 for reproducing a signal on an analog-signal recorded magnetic tape, a recording circuit 8 for converting the reproduced signal from the reproduce head 5 into a digital signal and a record head 6 for recording the digital signal

The reproduce head 5 is disposed in the upstream side of the transported magnetic tape 2 and the record head 6 is disposed on the downstream side.

### [ACTION]

According to the construction of this invention, while the analog-signal recorded magnetic tape 2 having an analog signal recorded thereon is being transposed, the analog signal reproduced by the reproduce head 5 is converted by the recording circuit 8 into a digital signal, and this digital signal is recorded by the record head 6 on the same magnetic tape 2.

Thus, the magnetic tape having the analog-signal recorded thereon is converted into the magnetic tape having the digital signal recorded thereon in place of the analog signal.

Moreover, if only the reproduce head for analog signal is added to the digital magnetic recording and reproducing apparatus so as to be disposed ahead of the record/reproduce head, it can be operated to have an analog/digital converter function, thus being small-sized, constructed to consume small power and produced at low cost.

One embodiment of this invention will be described with reference to Figs. 1 to 3.

Referring to Fig. 1, there is shown a digital recording and reproducing apparatus 1 of this embodiment, or a S-DAT that is compatible with the compact cassette. This S-DAT is able to record and reproduce on a DAT tape cassette having the same construction as the compact cassette by a multi-track digital magnetic head and also able to reproduce (or record) on the compact cassette by a monaural or stereo analog magnetic head.

There is also shown a magnetic tape 2 of the compact cassette that is loaded in the apparatus. This tape is transported from a supply reel 3 to a tape-up reel 4 in the arrow-a direction. This magnetic tape 2 has formed thereon analog tracks 10R and 10L on which R-channel and L-channel analog audio signals were previously recorded as for example shown in Fig. 2 (the lower half of the magnetic tape is shown). In this embodiment, an analog magnetic reproduce head 5 for reproducing the analog signal and digital magnetic record head 6 for recording the digital signal are disposed on the upstream side and downstream side relative to the tape travel, respectively so as to contact or oppose the magnetic tape 2. The signal from the magnetic reproduce head 5 is supplied to an analog reproducing circuit 7, and the output therefrom, or the audio signal is supplied through a digital recording circuit 8, thereby converted into a digital signal. This digital signal is supplied to the magnetic record head 6.

The magnetic record head 6 is formed of 8 head elements including, as for example shown in Fig. 2, 7 multiple-head elements 9₁ , 9₂ , 9₃ , 9₄ , 9₅ , 9₆ , 9₇ and one cue head element 9_{CUE.}

The analog magnetic reproduce head 5 can be formed of, as for example shown in Fig. 2, two head elements 10R and 10L opposing the R-channel and L-channel or can be formed of, as for example shown in Fig. 3, 8 digital head elements 9₁ to 9_{CUE.} When the digital magnetic head is formed of the digital magnetic head elements, the first three head elements 9₇ , 9₆ , 9₅ are used for reproducing the signal on the R-channel track T_{R} and the second three head elements 9₃ , 9₂ , 9₁ are used for reproducing the signal on the L-channel track T_{L}.

The magnetic reproduce head 5 can be formed of a thin film magnetic head, a magnetoresistance effect type (MR) magnetic head, a bulk magnetic head or the like. The magnetic record head 6 can be formed of a thin film magnetic head, a bulk magnetic head or the like.

In the apparatus of the above-mentioned construction, the magnetic type 2 of the compact cassette on which the analog audio signal is recorded is transported and reproduced by the magnetic reproduce head 5. The reproduced analog audio signals are supplied to the analog reproducing circuit 7. The reproduced signal, or analog audio signal from the analog reproducing circuit is supplied through the digital recording circuit 8, thereby converted into a digital signal. The digital signal is supplied to the magnetic recorded head 6, by which it is written over the magnetic tape 2.

Thus, as shown in Fig. 2 or 3, the analog tracks T_{R}, T_{L} on which the audio signal was recorded are rewritten as digital tracks (multiple tracks) T₁ to T₈ on the magnetic tape 2.

When the digital signal written on the magnetic tape 2 is reproduced, the magnetic head 6 is used if the magnetic record head 6 is a record/reproduce head of the apparatus having the magnetic reproduce head 5 and the magnetic record head 6 as shown in Fig. 2. Moreover, when the magnetic reproduce head 5 is used to serve dually as itself and as a digital magnetic head as shown in Fig. 3, this magnetic reproduce head 5 is used to reproduce.

Moreover, when the analog signal is converted into a digital signal and at the same time the digital signal written in place of the analog signal is monitored, a digital magnetic reproduce head 11 is located on the downstream side of the magnetic record head 6.

Also, after the digital tracks T₁ to T₈ are written in place of the audio tracks as shown in Figs. 2 and 3, they can be reproduced by the digital magnetic reproduce head from a principle basis, but actually partial analog tracks 10a remain in the guardbands between the digital tracks T₇, T₆, T₅ and between the digital tracks T₃, T₂, T₁ and thus may be picked up as noise. Therefore, an erase head 12 is preferably provided between the magnetic reproduce head 5 and the magnetic record head 6 as shown in Fig. 1 so that the analog tracks 10R, 10L, can be completely erased. In this case, it is possible to reproduce the analog signals, erase by the analog head 12 the analog tracks 10R, 10L, and then record the digital signals. According to the above construction, the analog audio signal recorded on a compact cassette can be converted into digital signal. Thus, even when the digital deck is widely used in the future, the old precious software (information recorded in analog signals) can be preserved in a digital form Also, since the analog signal can be converted into the digital signal on the same magnetic tape, the tape cassette can be effectively used.

Moreover, since the analog signal can be replaced by the digital signal on a single apparatus, the converting system can be small-sized, resulting in low cost and low power consumption.

While in the above embodiment, the analog signal is replaced by the corresponding digital signal by rewriting, the digital signal can be replaced by the corresponding audio signal. In this case the magnetic reproduce head 5 can be used for digital signals, the magnetic record head 6 for analog signals, the reproducing circuit 7 for a digital reproducing circuit, and the recording circuit 8 for an analog recording circuit. moreover, while the audio signal is treated in the above embodiment, the video signal may be similarly treated.

According to the magnetic recording apparatus of the invention, the magnetic tape on which the analog signal is recorded can be replaced by the corresponding digital signal by rewritting on the same magnetic tape. Thus, if the contents of the compact cassette are converted into digital signals on this apparatus, the software of the compact cassette can be preserved for the future in which, for example, the S-DAT exclusively for DAT tape cassette of the same construction as the compact cassette will be widely used.

Moreover, since the analog signal can be converted into the digital signal on a signal apparatus, the apparatus can be small-sized, operated with small power consumption and produced at low cost.

## Claims

1. A magnetic recording apparatus comprising:
a reproducing head (5) for reproducing an analog signal recorded on a track of a magnetic tape (2);
a recording circuit for generating a recording signal to convert the analog signal outputted from said reproducing head into a digital signal; and
a recording head (6) supplied with the digital recording signal from said recording circuit and for recording the digital recording signal on a magnetic tape, said recording head comprising a plurality of head elements (9₁) to (9_{CUE}) which are arranged in a perpendicular direction of the magnetic tape,
wherein the digital recording signal outputted from said recording circuit is recorded in a multiple track by said head elements of said recording head;
characterized in that the analog signal is reproduced from and the digital recording signal is recorded on the same tape.

## Patentansprüche

1. Magnetisches Aufzeichnungsgerät mit:
einem Wiedergabekopf (5) zum Wiedergeben eines auf einer Spur eines Magnetbands (2) aufgezeichneten analogen Signals;
einer Aufzeichnungsschaltung zum Erzeugen eines Aufzeichnungssignals, um das vom Wiedergabekopf ausgegebene analoge Signal in ein digitales Signal zu konvertieren; und
einem Aufzeichnungskopf (6), dem das digitale Aufzeichnungssignal von der Aufzeichnungsschaltung zugeführt wird, zum Aufzeichnen des digitalen Aufzeichnungssignals auf einem Magnetband, wobei der Aufzeichnungskopf eine Mehrzahl von Kopfelementen (9₁) bis (9_{cue}) enthält, die senkrecht zur Richtung des Magnetbands angeordnet sind,
wobei das von der Aufzeichnungsschaltung ausgegebene digitale Aufzeichnungssignal durch die Kopfelemente des Aufzeichnungskopfs auf einer Mehrfachspur aufgezeichnet wird;
**dadurch gekennzeichnet,** daß das digitale Aufzeichnungssignal auf demselben Band aufgezeichnet wird, von dem das analoge Signal wiedergegeben wird.

## Revendications

1. Appareil d'enregistrement magnétique comprenant :
une tête de reproduction (5) pour reproduire un signal analogique enregistré sur une piste d'une bande magnétique (2) ;
un circuit d'enregistrement (8) pour générer un signal d'enregistrement pour convertir le signal analogique fourni par ladite tête de reproduction en un signal numérique ; et
une tête d'enregistrement (6) recevant le signal d'enregistrement numérique dudit circuit d'enregistrement et pour enregistrer le signal d'enregistrement numérique sur une bande magnétique, ladite tête d'enregistrement comprenant une pluralité d'éléments de tête (9₁) à (9_{CUE}) qui est disposée dans une direction perpendiculaire à la bande magnétique,
où le signal d'enregistrement numérique délivré par ledit circuit d'enregistrement est enregistré sur de multiples pistes par lesdits éléments de tête de ladite tête d'enregistrement ;
caractérisé en ce que le signal analogique est reproduit à partir d'une bande et le signal d'enregistrement numérique est enregistré sur la même bande.
